# EUROPEAN PATENT APPLICATION

(11) **EP 4 342 629 A1**
(43) Date of publication of application: **27.03.2024**
(21) Application number: 22196943.9
(22) Date of filing: 21.09.2022
(51) Int. Cl.: B23Q 11/10

(54) **METHOD AND ARRANGEMENT FOR SUPPLYING A TOOLING MACHINE WITH COOLANT LUBRICANT**

(71) Applicant: ifm electronic gmbh, 45128 Essen (DE)
(72) Inventor: Buhl, Peter, 88079 Kressbronn (DE); Graca, Piotr, 47-180 Izbicko (PL)
(74) Representative: Ifm Patentabteilung

(57) **Abstract**

The invention concerns an arrangement for supplying a tooling machine with coolant lubricant which includes a pump P driven by a motor M transporting the coolant lubricant to the tooling machine TM in a lubricant circuit LC and a flow meter FM arranged in the lubricant circuit LC directly in front of the tooling machine TM. The flowmeter FM is connected to a control unit FC receiving the measured flow values, which control unit FC is also connected to the pump P and controls the coolant lubricant flow according to the task of the tooling machine TM (Fig. 1).

## Description

The present invention relates to a Method and arrangement for supplying a tooling machine with coolant lubricant.

Methods and Arrangements for supplying tooling machines with coolant lubricant are well known.

In the area of tooling machines, it is known to cool the rotating part of the tooling machine which is in contact with the workpiece and where heat and chips are generated to supply with a coolant lubricant.

The coolant lubricant is guided through internal channels in the rotating part e.g. a drill bit or a cutter according to the document DE102019114704A1.

Normally a pump is connected with a tank and delivers the coolant lubricant to the tooling machine. According to the working process different drill bits and different rotational speeds of the rotating parts are necessary.

The document EP2774720B1 shows a tooling machine with a coolant lubricant distribution system, which is pressure controlled.

The document CA2960464A1 shows a drill bit with a drill main body which has a coolant hole at the tip portion of the main body. The coolant lubricant is supplied from a main shaft of a machining tool flows into the coolant hole and then the coolant lubricant flows out to the tip portion of the drill main body and the machined portion of the work material e.g. the drill hole.

Another drill bit with a coolant hole is mentioned in the document DE3615940C2. The typical pressure for the coolant lubricant is in the range of 50 to 100 bar. Experiments have shown that - especially for drill bits with coolant holes - the precision of the drill holes is less accurate in specific cases and the wear of the drill bit could be high.

The objective of the present invention is to provide a method and an arrangement for supplying a tooling machine with coolant lubricant resulting in a better precision of the drill holes and less tool wear.

In accordance with the present invention, there is provided a Method and Arrangement for supplying a tooling machine with coolant lubricant, comprising at the base of the circuit a tank filled with coolant lubricant, a pump driven by a motor supplying the circuit with coolant lubricant and a flowmeter positioned ahead of the tooling, the flowmeter is linked to a flow control unit which receives the flow signal (actual value) and the setpoint value for a specific drill bit and adapt the flow to the specified setpoint.

Advantageously, the flow of the coolant lubricant supplied to the tooling is precisely adjusted, thereby assuring optimized tool work resulting in more accurate drilling and less tooling wear.

Further benefits and advantages of the present invention will become apparent after a careful reading of the detailed description with appropriate reference to the accompanying drawings.

The invention is described with the following figures:
Fig. 1 shows a schematic view of an Arrangement for supplying a tooling machine with coolant lubricant according to a first example of the invention comprising a circuit with a pump linked to a tank and a flow meter, and providing coolant lubricant to the tooling machine, the flow meter and pump are communicating with a flow control, which flow control and tooling machine are communicating with a machine control.
Fig. 2 shows a schematic view of an Arrangement for supplying a tooling machine with coolant lubricant according to a second example of the invention comprising an additional valve communicating with the flow control
Fig. 3 shows a schematic view of an Arrangement for supplying a tooling machine with coolant lubricant according to a third example of the invention comprising an additional pump securing valve and bypass with an additional valve and flow meter communicating with the flow control

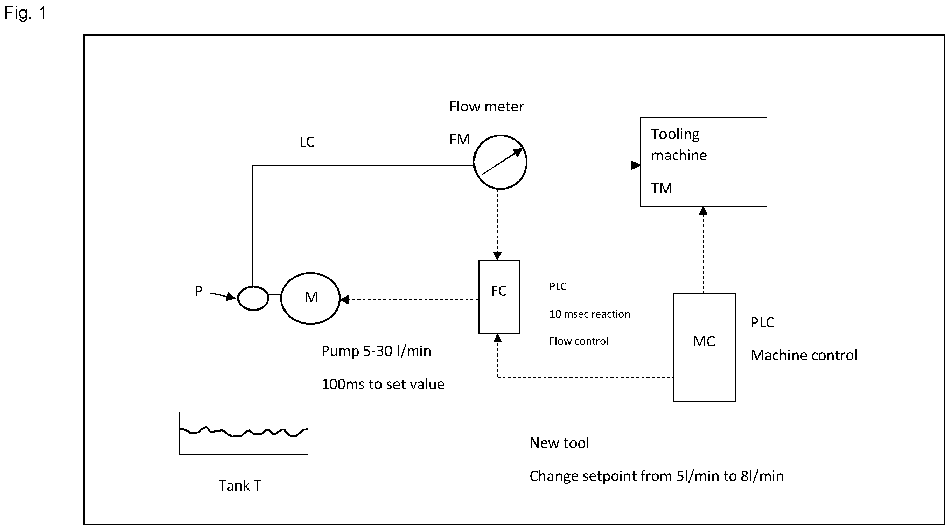

Referring to the drawings and initially to Fig. 1, an Arrangement for supplying a tooling machine with coolant lubricant arranged in a lubricant circuit LC, which lubricant circuit LC comprises a pump P driven by a motor M which transports the coolant lubricant from the tank T to the tooling machine TM, in order to assure a constant and optimized cooling and lubrication of the tool and the contact surface with the processed material. The lubricant circuit LC comprises a flow meter FM placed directly in front of the tooling machine TM and the measured flow value is received by a flow control unit FC connected with the flow meter FM. The flow control unit FC could be a programmable logical controller PLC e.g. Beckhoff CX7000 which is fast enough to adjust the flow of the coolant lubricant to the specified value e.g. during the whole drilling process from the setting of the drill tip on the workpiece until the hole is finished. The drill bit size is in the range of a few mm up to 20 mm diameter or more.

The flow control unit FC is connected with the pump P in order to generate an adjusted flow of the coolant lubricant according to the task of the tooling machine TM and the tool parameters.

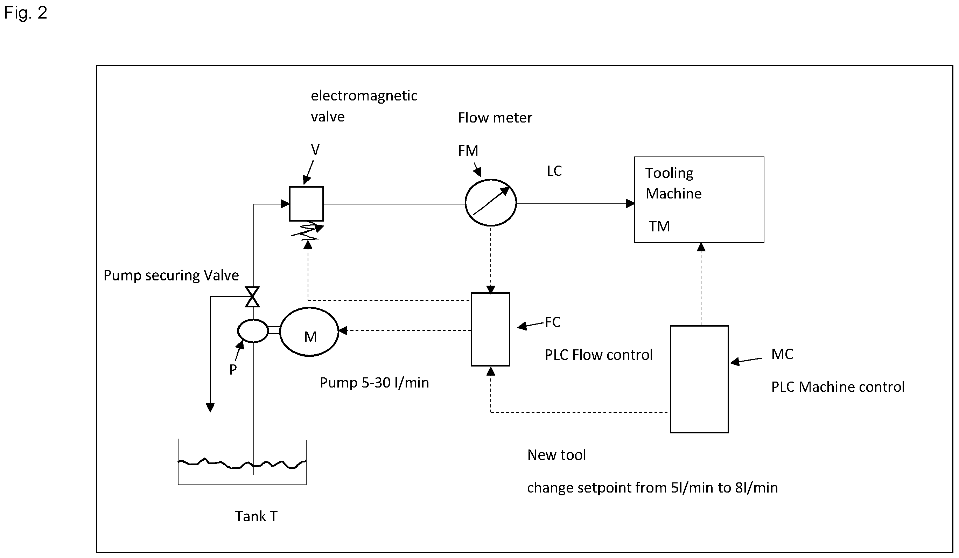

Referring to Fig. 2 the arrangement for supplying a tooling machine TM with coolant lubricant wherein a proportional electromagnetic valve V is used for regulating the flow of the coolant lubricant supplied to the tooling and the valve receives a PWM signal. In this arrangement the flow can be controlled by the pump P or the valve V but for energy saving purposes and for a fast reaction time it is preferable to use the valve V for a fine tuning of the flow and the pump P for generating a basic pressure. The arrangement for supplying a tooling machine with coolant lubricant wherein the flow meter FM used for the solution can be a quick response flow meter FM (milliseconds range of response compared to flow meter FMs with seconds range of response) which allows a quick and smooth flow adaptation and is a mechatronic flow meter FM (e.g. SB0551 company ifm electronic gmbh). To avoid PT2 resonances a short reaction time (e.g. 1 msec) is necessary for pump control.

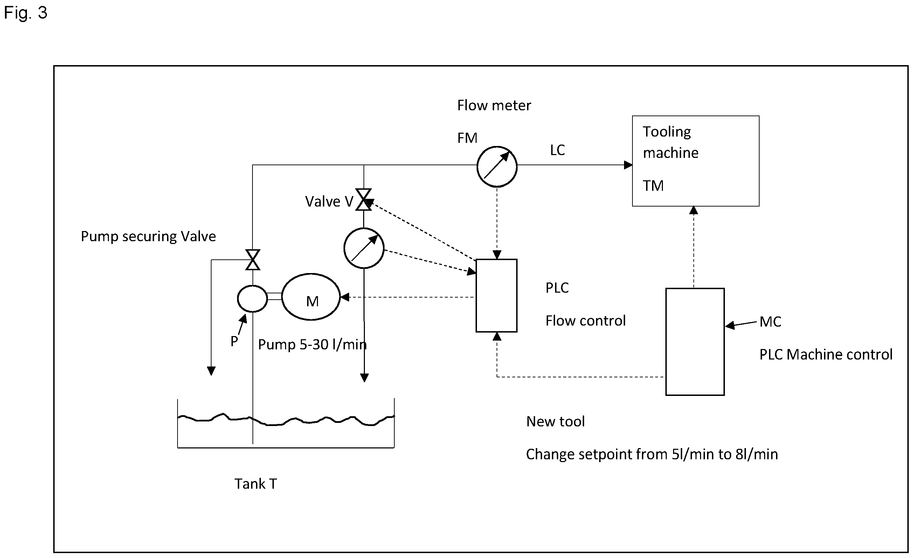

Referring to Fig. 3, the arrangement for supplying a tooling machine with coolant wherein a proportional valve is used between the pump P and the tooling machine TM to provide an adjusted flow of the coolant lubricant, i.e. if the tooling needs an adjusted pressure ten times lower than the pressure of the minimum safe amount required for the pump P. The valve V can be placed in the circuit or in parallel to the circuit.

Experiments have shown that the precision of the drill holes is much accurate when the flow of the coolant lubricant is controlled instead of the pressure. Especially the surface roughness, the shape of the hole and the cylindrical shape is significantly improved. Furthermore the wear of the drill bit could be reduced by 10-20 % which is also significantly. In most cases the pressure lies below the normally used pressure in cooling systems of tooling machines according to the state of the art. A side effect is therefore the reduction of energy consumption of cooling system because the power consumption of the pump can be reduced.

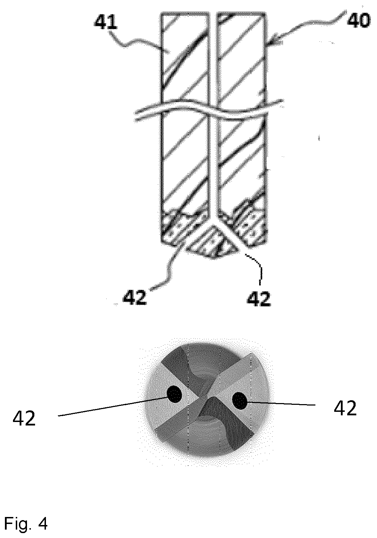

Figure 4 shows a drill bit 40 with a front view of a drill bit. The drill bit 40 is provided with a pair of coolant supply holes 42 through which coolant is supplied and which extend from the rear end toward the side of the front end of the drill 40. The coolant supply hole 42 is arranged at the cutting portion in such a manner that the coolant supply hole 42 is spaced from the chip evacuation groove 41 and has an opening at the cutting edge.

### List of references:

- LC: lubricant circuit
- M: motor
- T: tank
- P: pump
- V: valve
- FM: flow meter
- FC: flow control unit
- TM: PLC tooling machine
- MC: PLC machine control

## Claims

1. Arrangement for supplying a tooling machine with coolant lubricant, comprising:
a pump P driven by a motor M transporting the coolant lubricant to the tooling machine TM in a lubricant circuit LC
a flow meter FM arranged in the lubricant circuit LC directly in front of the tooling machine TM
a control unit connected with the flow meter FM and the pump P to adjust the flow of the coolant lubricant in the lubricant circuit LC to a specified value according to the task of the tooling machine TM.

2. Arrangement according to claim 1, **characterized in, that** the end of the lubricant circuit ends at the front end of the drill bit 40.

3. Arrangement according to one of the forgoing claims, **characterized in, that** the flow meter FM is a mechatronic flow meter.

4. Arrangement according to one of the forgoing claims wherein a valve V is arranged in the lubricant circuit LC for reducing the pressure of the coolant lubricant in the lubricant circuit LC when the adjusted pressure generated by the pump P is higher than the adjusted pressure of the coolant lubricant transported in the lubricant circuit LC to the tooling machine TM

5. Arrangement according to one of the forgoing claims 1 and 2 wherein a valve V is arranged in the lubricant circuit LC and used for regulating the flow of the coolant lubricant in the lubricant circuit LC

6. The arrangement according to one of the forgoing claims wherein the measured flow value is used to adapt the pressure of the coolant lubricant in the lubricant circuit LC

7. The arrangement according to one of the forgoing claims **characterized in, that** the flow meter FM has a response time of a millisecond range

8. The arrangement according to one of the forgoing claims **characterized in, that** there is one or more flow meters FM.

9. The arrangement according to one of the forgoing claims **characterized in, that** the valve V is an electromagnetic valve

10. The arrangement according to one of the forgoing claims **characterized in, that** the valve V receives a PWM signal.

11. Method for supplying a tooling machine with coolant lubricant with the following steps:
a. Selecting a specific flow value according to the drill bit in use by a machine control unit MC
b. setting the flow in the lubricant circuit LC according the selected flow value
c. regulating the flow of the cooling lubricant to the selected flow value during the hole drilling process

12. Method according to claim 11, wherein the flow in the lubricant circuit LC is measured with a mechatronic flow meter.

13. Method according to claim 11 or 12, wherein the regulation is achieved by a PID-control with a reaction time of less than 50 msec especially less than 10 msec.
